(19)

Europäisches Patentamt
European Patent Office
Office européen des brevets

(11) **EP 4 109 165 A1**

(12) **EUROPEAN PATENT APPLICATION**

(43) Date of publication:
**28.12.2022 Bulletin 2022/52**

(21) Application number: **22179749.1**

(22) Date of filing: **17.06.2022**

(51) International Patent Classification (IPC):
**G02B 26/08** $^{(2006.01)}$

(52) Cooperative Patent Classification (CPC):
**G02B 26/0833**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.06.2021 JP 2021102628**

(71) Applicant: **FUJIFILM Corporation**
**Tokyo 106-8620 (JP)**

(72) Inventors:
• **NAONO, Takayuki**
**Kanagawa, 258-8577 (JP)**
• **TANAKA, Nobuya**
**Kanagawa, 258-8577 (JP)**
• **NISHIURA, Yosuke**
**Kanagawa, 258-8577 (JP)**
• **ABE, Masaaki**
**Kanagawa, 258-8577 (JP)**

(74) Representative: **HGF**
**HGF Limited**
**1 City Walk**
**Leeds LS11 9DX (GB)**

(54) **OPTICAL SCANNING DEVICE AND CONTROL METHOD THEREOF**

(57)     Provided are an optical scanning device and a control method thereof capable of realizing a spiral rotation operation in which a change speed of a swing amplitude is fast and a radius vector changes linearly even in a case where a resonance frequency and a driving frequency do not match.

An optical scanning device includes a mirror device that has a mirror portion, which is swingable around a first axis and a second axis orthogonal to each other, having a reflecting surface reflecting incident light, a first actuator causing the mirror portion to swing around the first axis by applying a rotational torque around the first axis to the mirror portion, and a second actuator causing the mirror portion to swing around the second axis by applying a rotational torque around the second axis to the mirror portion, and a processor that provides a first driving signal to the first actuator and provides a second driving signal to the second actuator. The processor, with the first driving signal and the second driving signal each as cyclic voltage signals whose amplitudes and phases change with time, causes the mirror portion to perform a spiral rotation operation including a period in which a swing amplitude around the first axis and a swing amplitude around the second axis change linearly.

FIG. 1

EP 4 109 165 A1

**Description**

BACKGROUND OF THE INVENTION

1. Field of the Invention

The technique of the present disclosure relates to an optical scanning device and a control method thereof.

2. Description of the Related Art

In a field of light detection and ranging (LiDAR), an omnidirectional type that can obtain a 360° field of view is drawing attention. Some omnidirectional LiDAR devices are configured by combining a micro electro mechanical systems (MEMS) mirror and an omnidirectional lens. The LiDAR device using the MEMS mirror is lightweight and can be reduced in cost.

In the omnidirectional LiDAR device, the MEMS mirror needs to scan all over a donut-shaped incident surface of the omnidirectional lens with a light beam. In order to scan the above range more efficiently, the MEMS mirror desirably performs a spiral scan such that a radius vector of the light beam changes linearly with time. For this purpose, a spiral rotation operation is required in which a swing angle amplitude (hereinafter referred to as swing amplitude) of a mirror portion changes at a constant change speed. Further, in a case where such a LiDAR device is mounted on a moving body and the like, scanning of a wider range at a high frame rate is important. For this purpose, a change speed of the swing amplitude of the mirror portion is required to be increased. Specifically, considering practicality of the LiDAR device, the swing amplitude needs to have the change speed of at least 0.5 rad/s. This change speed corresponds to, for example, a case where reciprocating motion is performed in which a change amount of the swing amplitude is 3° and a time required for the change is 0.1 s, and a minimum required scan range can be achieved at a frame rate of 10 Hz.

JP2008-170500A describes a technique related to the spiral rotation operation of the MEMS mirror. JP2008-170500A discloses an optical scanning device comprising a swing plate, a first swing unit that causes, to the swing plate, a first swing around a first axis parallel to a plane including the swing plate, and a second swing unit that causes, to the swing plate, a second swing around a second axis that is parallel to the plane including the swing plate and perpendicular to the first axis at a frequency identical to that of the first swing and at a phase different from that of the first swing by approximately 90°. Further, JP2008-170500A discloses that a scanning position of light reflected by the swing plate is moved to draw a swirl (that is, the spiral rotation operation is performed) with increase or decrease in amplitudes of both the first swing and the second swing with time.

In the technique described in JP2008-170500A, an amplitude of a sinusoidal driving signal is caused to fluctuate with time in order to increase or decrease the amplitudes of the first swing and the second swing with time.

SUMMARY OF THE INVENTION

In a case where a resonance frequency and a driving frequency around each of the first axis and the second axis all match, or in a case where the change speed of the swing amplitude is slow, the spiral rotation operation in which the radius vector changes linearly can be performed by changing only the amplitude of the driving signal as described in JP2008-170500A.

However, there is a variation or change in each of the resonance frequencies around the two axes due to a process variation of the MEMS mirror, a temperature change, and the like. Therefore, it is difficult to always match the driving frequency and the resonance frequency. The same applies in a case where there is non-linearity in mechanical properties of the MEMS mirror. The non-linearity is a phenomenon in which the resonance frequency or the like changes due to an effect (hard spring effect or soft spring effect) in which a rigidity or inertia moment changes according to a magnitude of a deflection angle of the mirror, for example.

The applicants have found that in a case where the resonance frequency and the driving frequency do not completely match, a response phase of the MEMS mirror cannot be kept constant in the driving method of changing only the amplitude of the driving signal as in the related art in a case where the swing amplitude is changed at high speed, and thus the spiral rotation operation in which the radius vector changes linearly is difficult to be realized. This is particularly remarkable at a time of high-speed modulation in which the change speed of the swing amplitude is 0.5 rad/s or more.

An object of the technique of the present disclosure is to provide an optical scanning device and a control method thereof capable of realizing a spiral rotation operation in which a change speed of a swing amplitude is fast and a radius vector changes linearly even in a case where a resonance frequency and a driving frequency do not match.

An optical scanning device according to an aspect of the present disclosure comprises a mirror device that has a mirror portion, which is swingable around a first axis and a second axis orthogonal to each other, having a reflecting surface reflecting incident light, a first actuator causing the mirror portion to swing around the first axis by applying a rotational torque around the first axis to the mirror portion, and a second actuator causing the mirror portion to swing around the second axis by applying a rotational torque around the second axis to the mirror portion, and a processor that provides a first driving signal to the first actuator and provides a second driving signal to the second actuator. The processor, with the first driving signal and the second driving signal each as cyclic voltage signals whose amplitudes and phases change with time, causes the mirror portion to perform a spiral rotation operation including a period in which a swing amplitude around the first axis and a swing amplitude around the second axis change linearly.

In order to realize a large swing with low power consumption by using a resonance phenomenon, a frequency of the cyclic voltage signal is preferably a frequency near a resonance frequency around the first axis and a resonance frequency around the second axis.

The resonance frequency around the first axis is preferably different from the resonance frequency around the second axis to enable prevention of an unintended coupling operation of both axes.

The frequency of the cyclic voltage signal is preferably different from at least one of the resonance frequency around the first axis or the resonance frequency around the second axis. Accordingly, it is possible to reduce a characteristic variation due to an abrupt characteristic change near a resonance point or a time-dependent change.

In the period, an absolute value of a change speed of the swing amplitude around the first axis and an absolute value of a change speed of the swing amplitude around the second axis are each preferably 0.5 rad/s or more. Accordingly, it is possible to achieve both a wide field of view and a high frame rate in a case where the optical scanning device is applied to the LiDAR device.

In the period, an absolute value of a change speed of the swing amplitude around the first axis and an absolute value of a change speed of the swing amplitude around the second axis are each preferably 1.0 rad/s or more.

The period preferably includes an expansion period in which the swing amplitude around the first axis and the swing amplitude around the second axis increase linearly and a contraction period in which the swing amplitude around the first axis and the swing amplitude around the second axis decrease linearly.

A control method of an optical scanning device according to the present disclosure comprises a mirror device that has a mirror portion, which is swingable around a first axis and a second axis orthogonal to each other, having a reflecting surface reflecting incident light, a first actuator causing the mirror portion to swing around the first axis by applying a rotational torque around the first axis to the mirror portion, and a second actuator causing the mirror portion to swing around the second axis by applying a rotational torque around the second axis to the mirror portion. The control method includes, with the first driving signal provided to the first actuator and the second driving signal provided to the second actuator each as cyclic voltage signals whose amplitudes and phases change with time, causing the mirror portion to perform a spiral rotation operation including a period in which a swing amplitude around the first axis and a swing amplitude around the second axis change linearly.

According to the technique of the present disclosure, it is possible to provide the optical scanning device and the control method thereof capable of realizing the spiral rotation operation in which the change speed of the swing amplitude is fast and the radius vector changes linearly even in a case where the resonance frequency and the driving frequency do not match.

BRIEF DESCRIPTION OF THE DRAWINGS

Fig. 1 is a schematic diagram of an optical scanning device.
Fig. 2 is a block diagram showing an example of a hardware configuration of a driving controller.
Fig. 3 is an external perspective view of a micromirror device.
Figs. 4A and 4B are diagrams for describing deflection angles in a case where a mirror portion swings, where Fig. 4A shows a first deflection angle and Fig. 4B shows a second deflection angle.
Figs. 5A and 5B are diagrams showing examples of driving signals applied to a first actuator and a second actuator, where Fig. 5A shows a first driving signal and Fig. 5B shows a second driving signal.
Fig. 6 is a table showing driving conditions used in Examples 1 and 2.
Fig. 7 is a diagram showing changes in an amplitude and phase of the first driving signal with time in one modulation cycle, where (A) of Fig. 7 shows the change in the amplitude of the first driving signal with time and (B) of Fig. 7 shows the change in the phase of the first driving signal with time.
Fig. 8 is a diagram showing changes in an amplitude and phase of the second driving signal with time in one modulation cycle, where (A) of Fig. 8 shows the change in the amplitude of the second driving signal with time and (B) of Fig. 8 shows the change in the phase of the second driving signal with time.
Fig. 9 is a diagram showing changes in driving voltage waveforms with time in one modulation cycle, where (A) of Fig. 9 shows the waveform of the first driving signal and (B) of Fig. 9 shows the waveform of the second driving signal.

Fig. 10 is a diagram showing measurement results of the first deflection angle and the second deflection angle in one modulation cycle.

Figs. 11A and 11B are diagrams showing spiral orbits in one modulation cycle, where Fig. 11A shows the spiral orbit during an expansion period and Fig. 11B shows the spiral orbit during a contraction period.

Fig. 12 is a diagram showing changes in the amplitude and phase of the first driving signal with time in one modulation cycle, where (A) of Fig. 12 shows the change in the amplitude of the first driving signal with time and (B) of Fig. 12 shows the change in the phase of the first driving signal with time.

Fig. 13 is a diagram showing changes in the amplitude and phase of the second driving signal with time in one modulation cycle, where (A) of Fig. 13 shows the change in the amplitude of the second driving signal with time and (B) of Fig. 13 shows the change in the phase of the second driving signal with time.

Fig. 14 is a diagram showing changes in the driving voltage waveforms with time in one modulation cycle, where (A) of Fig. 14 shows the waveform of the first driving signal and (B) of Fig. 14 shows the waveform of the second driving signal.

Fig. 15 is a diagram showing measurement results of the first deflection angle and the second deflection angle in one modulation cycle.

Figs. 16A and 16B are diagrams showing spiral orbits in one modulation cycle, where Fig. 16A shows the spiral orbit during the expansion period and Fig. 16B shows the spiral orbit during the contraction period.

Fig. 17 is a table showing a driving condition used in a comparative example.

Fig. 18 is a diagram showing changes in the amplitudes with time in one modulation cycle, where (A) of Fig. 18 shows the change in the amplitude of the first driving signal with time and (B) of Fig. 18 shows the change in the amplitude of the second driving signal with time.

Fig. 19 is a diagram showing changes in driving voltage waveforms with time in one modulation cycle, where (A) of Fig. 19 shows the driving voltage waveform of the first driving signal and (B) of Fig. 19 shows the driving voltage waveform of the second driving signal.

Fig. 20 is a diagram showing measurement results of the first deflection angle and the second deflection angle in one modulation cycle.

Figs. 21A and 21B are diagrams showing orbits in one modulation cycle, where Fig. 21A shows the orbit during the expansion period and Fig. 21B shows the orbit during the contraction period.

## DESCRIPTION OF THE PREFERRED EMBODIMENTS

An example of an embodiment according to the technique of the present disclosure will be described with reference to the accompanying drawings.

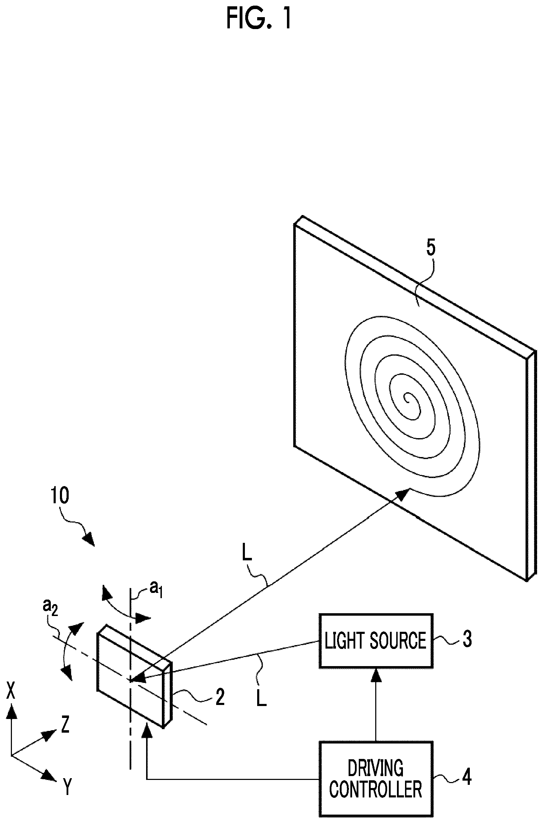

Fig. 1 schematically shows an optical scanning device 10 according to an embodiment. The optical scanning device 10 has a MEMS mirror 2, a light source 3, and a driving controller 4. In the optical scanning device 10, under control of the driving controller 4, a light beam L emitted from the light source 3 is reflected by the MEMS mirror 2 to perform light scanning on a surface to be scanned 5. The surface to be scanned 5 is, for example, a screen. The MEMS mirror 2 is an example of a "mirror device" according to the technique of the present disclosure.

In a case where the optical scanning device 10 is applied to a LiDAR device, the MEMS mirror 2 is configured in combination with an omnidirectional lens. In this case, the MEMS mirror 2 scans a donut-shaped incident surface of the omnidirectional lens with the light beam L.

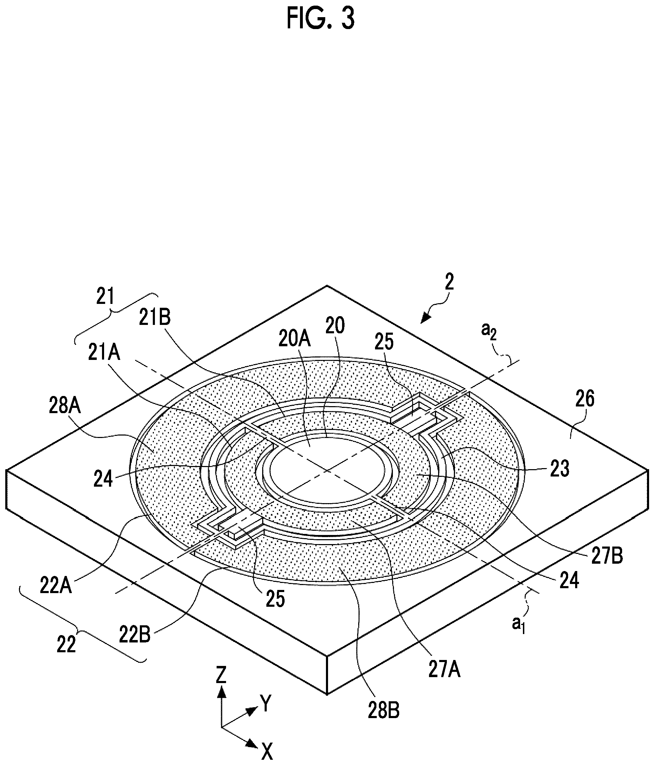

The MEMS mirror 2 is a piezoelectric two-axis driving type micromirror device that can swing a mirror portion 20 (refer to Fig. 3) around a first axis $a_1$ and a second axis $a_2$ orthogonal to the first axis $a_1$. Hereinafter, a direction parallel to the first axis $a_1$ is an X direction, a direction parallel to the second axis $a_2$ is a Y direction, and a direction orthogonal to the first axis $a_1$ and the second axis $a_2$ is a Z direction.

In the present embodiment, an example in which the first axis $a_1$ and the second axis $a_2$ are orthogonal (that is, intersect perpendicularly) is shown, but the first axis $a_1$ and the second axis $a_2$ may intersect at an angle other than 90°. In the present disclosure, orthogonal means intersecting within a certain angle range including a margin of error centered at 90°.

The light source 3 is, for example, a laser device that emits a laser beam as the light beam L. The light source 3 preferably emits the light beam L perpendicularly to a reflecting surface 20A (refer to Fig. 3) provided in the mirror portion 20 in a state where the mirror portion 20 of the MEMS mirror 2 is stationary.

The driving controller 4 outputs driving signals to the light source 3 and the MEMS mirror 2 based on optical scanning information. The light source 3 generates the light beam L based on the input driving signal and emits the generated light beam to the MEMS mirror 2. The MEMS mirror 2 swings the mirror portion 20 around the first axis $a_1$ and the second axis $a_2$ based on the input driving signal.

As will be described in detail below, the driving controller 4 causes the mirror portion 20 to perform a spiral rotation operation including a period in which a swing amplitude around the first axis $a_1$ and a swing amplitude around

the second axis $a_2$ change linearly (that is, spiral rotation operation in which a radius vector changes linearly). With the spiral rotation operation of the mirror portion 20, the reflected light beam L is scanned to draw a spiral orbit (that is, a spiral curve) on the surface to be scanned 5.

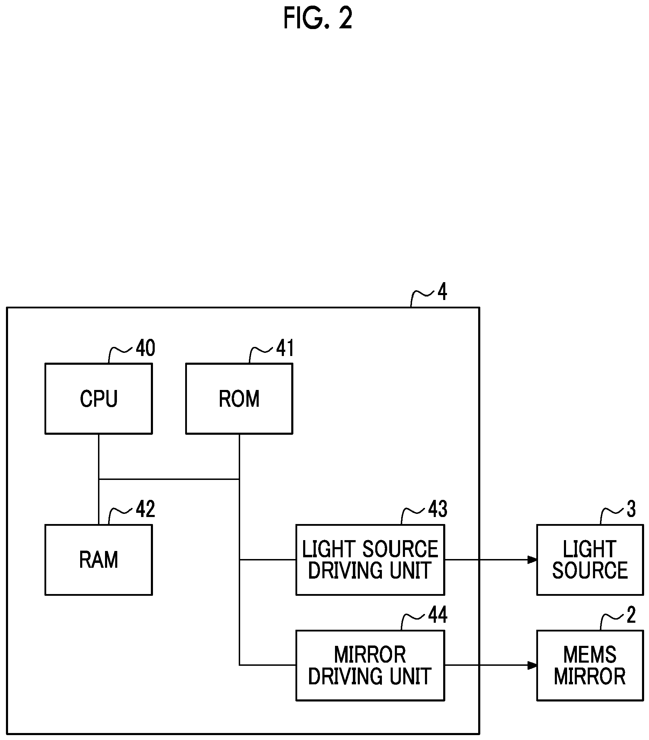

Fig. 2 shows an example of a hardware configuration of the driving controller 4. The driving controller 4 has a central processing unit (CPU) 40, a read only memory (ROM) 41, a random access memory (RAM) 42, a light source driving unit 43, and a mirror driving unit 44. The CPU 40 is a calculation unit that reads out a program and data from a storage device such as the ROM 41 into the RAM 42 and executes processing to realize the entire function of the driving controller 4. The CPU 40 is an example of a "processor" according to the technique of the present disclosure.

The ROM 41 is a non-volatile storage device and stores the program for the CPU 40 to execute the processing and the data such as the above-mentioned optical scanning information. The RAM 42 is a non-volatile storage device that temporarily holds the program and the data.

The light source driving unit 43 is an electric circuit that outputs the driving signal to the light source 3 under the control of the CPU 40. In the light source driving unit 43, the driving signal is a driving voltage for controlling an emission timing and emission intensity of the light source 3.

The mirror driving unit 44 is an electric circuit that outputs the driving signal to the MEMS mirror 2 under the control of the CPU 40. In the mirror driving unit 44, the driving signal is a driving voltage for controlling a timing, cycle, and deflection angle of swinging the mirror portion 20 of the mirror driving unit 44. As will be described in detail below, the driving signal includes a first driving signal and a second driving signal.

For example, in the mirror driving unit 44, the driving signal is created as a digital signal and output via a digital analog converter (DAC) and an amplification amplifier. The driving signal may be output as a stepped waveform based on the number of resolution bits of a digital signal source. Further, the driving signal can be created from a pulse signal, a bandpass filter, and the like.

The CPU 40 controls the light source driving unit 43 and the mirror driving unit 44 based on the optical scanning information. The optical scanning information represents how to scan the surface to be scanned 5 with the light beam L. In the present embodiment, the optical scanning information represents that the light beam L is scanned to draw the spiral orbit on the surface to be scanned 5. For example, in a case where the optical scanning device 10 is applied to the LiDAR device, the optical scanning information includes a timing of emitting the light beam L for distance measurement, an emission range of the light beam, and the like.

Next, an example of a configuration of the MEMS mirror 2 will be described with reference to Fig. 3. Fig. 3 is an external perspective view of the MEMS mirror 2.

The MEMS mirror 2 has the mirror portion 20, a first actuator 21, a second actuator 22, a support frame 23, a first support portion 24, a second support portion 25, and a fixing portion 26. The MEMS mirror 2 is formed, for example, by etching a silicon-on-insulator (SOI) substrate.

The mirror portion 20 has the reflecting surface 20A reflecting incident light. The reflecting surface 20A is formed of, for example, a metal thin film such as gold (Au) or aluminum (Al) provided on one surface of the mirror portion 20. The reflecting surface 20A is, for example, circular.

The first actuator 21 is disposed so as to surround the mirror portion 20. The support frame 23 is disposed so as to surround the mirror portion 20 and the first actuator 21. The second actuator 22 is disposed so as to surround the mirror portion 20, the first actuator 21, and the support frame 23.

The first support portion 24 connects the mirror portion 20 and the first actuator 21 on the first axis $a_1$ and supports the mirror portion 20 swingably around the first axis $a_1$. The first axis $a_1$ is in a plane including the reflecting surface 20A in a case where the mirror portion 20 is stationary. For example, the first support portion 24 is a torsion bar extending along the first axis $a_1$. Further, the first support portion 24 is connected to the support frame 23 on the first axis $a_1$.

The second support portion 25 connects the first actuator 21 and the second actuator 22 on the second axis $a_2$ and supports the mirror portion 20 and the first actuator 21 swingably around the second axis $a_2$. The second axis $a_2$ is orthogonal to the first axis $a_1$ in the plane including the reflecting surface 20A in a case where the mirror portion 20 is stationary. Further, the second support portion 25 is connected to the support frame 23 and the fixing portion 26 on the second axis $a_2$.

The fixing portion 26 is connected to the second actuator 22 by the second support portion 25. The fixing portion 26 has a rectangular outer shape and surrounds the second actuator 22. Lengths of the fixing portion 26 in the X direction and the Y direction are each, for example, about 1 mm to 10 mm. A thickness of the fixing portion 26 in the Z direction is, for example, about 5 $\mu$m to 0.2 mm.

The first actuator 21 and the second actuator 22 are piezoelectric actuators each provided with a piezoelectric element. The first actuator 21 applies a rotational torque around the first axis $a_1$ to the mirror portion 20. The second actuator 22 applies the rotational torque around the second axis $a_2$ to the mirror portion 20 and the first actuator 21. Accordingly, the mirror portion 20 swings around the first axis $a_1$ and around the second axis $a_2$.

The first actuator 21 is an annular thin plate member that surrounds the mirror portion 20 in an XY plane. The first actuator 21 is configured of a pair of a first movable portion 21A and a second movable portion 21B. The first movable portion 21A and the second movable portion 21B are each semi-annular. The first movable portion 21A and the second movable portion 21B have a shape that is axisymmetric with respect to the first axis $a_1$ and are connected on the first axis $a_1$.

The support frame 23 is an annular thin plate member that surrounds the mirror portion 20 and the first actuator 21 in the XY plane.

The second actuator 22 is an annular thin plate member that surrounds the mirror portion 20, the first actuator 21, and the support frame 23 in the XY plane. The second actuator 22 is configured of a pair of a first movable portion 22A and a second movable portion 22B. The first movable portion 22A and the second movable portion 22B are each semi-annular. The first movable portion 22A and the second movable portion 22B have a shape that is axisymmetric with respect to the second axis $a_2$ and are connected on the second axis $a_2$.

In the first actuator 21, the first movable portion 21A and the second movable portion 21B are each provided with a piezoelectric element 27A and a piezoelectric element 27B. In the second actuator 22, the first movable portion 22A and the second movable portion 22B are each provided with a piezoelectric element 28A and a piezoelectric element 28B.

In this example, the first actuator 21 and the second actuator 22 are each configured as separate annular structures, but the present disclosure is not limited thereto. The first actuator 21 and the second actuator 22 may be configured to coexist in one structure. For example, piezoelectric bodies are disposed into one annular structure in a divided manner. The first driving signal and the second driving signal are provided to two piezoelectric parts separated by the division in this manner, and thus the mirror swings around the first axis $a_1$ and around the second axis $a_2$ can be realized.

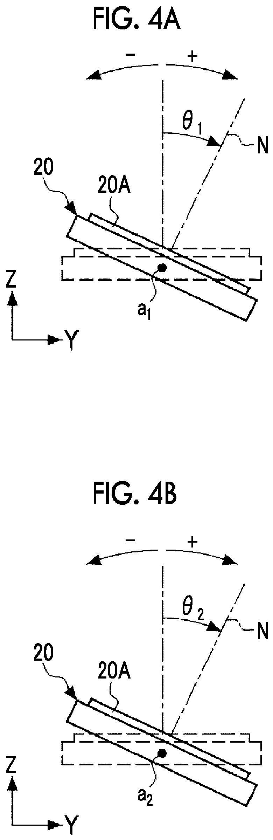

Figs. 4A and 4B describe deflection angles in a case where the mirror portion 20 swings. Fig. 4A shows a deflection angle (hereinafter referred to as a first deflection angle) $\theta_1$ around the first axis $a_1$ of the mirror portion 20. Fig. 4B shows a deflection angle (hereinafter referred to as a second deflection angle) $\theta_2$ around the second axis $a_2$ of the mirror portion 20.

As shown in Fig. 4A, the first deflection angle $\theta_1$ is an angle at which a normal line N of the reflecting surface 20A of the mirror portion 20 is inclined in a YZ plane. The first deflection angle $\theta_1$ takes a positive value in a case where the normal line N of the reflecting surface 20A is inclined in a +Y direction, and the first deflection angle $\theta_1$ takes a negative value in a case where the normal line N thereof is inclined in a -Y direction.

The first deflection angle $\theta_1$ is controlled by a driving signal (hereinafter referred to as a first driving signal) provided to the first actuator 21 by the driving controller 4. The first driving signal is, for example, a sinusoidal alternating voltage. The first driving signal includes a driving voltage waveform $V_{1A}(t)$ applied to the first movable portion 21A and a driving voltage waveform $V_{1B}(t)$ applied to the second movable portion 21B. The driving voltage waveform $V_{1A}(t)$ and the driving voltage waveform $V_{1B}(t)$ are out of phase with each other (that is, phase difference is 180°).

As shown in Fig. 4B, the second deflection angle $\theta_2$ is an angle at which the normal line N of the reflecting surface 20A of the mirror portion 20 is inclined in an XZ plane. The second deflection angle $\theta_2$ takes a positive value in a case where the normal line N of the reflecting surface 20A is inclined in a +X direction, and the second deflection angle $\theta_2$ takes a negative value in a case where the normal line N thereof is inclined in a -X direction.

The second deflection angle $\theta_2$ is controlled by a driving signal (hereinafter referred to as a second driving signal) provided to the second actuator 22 by the driving controller 4. The second driving signal is, for example, a sinusoidal alternating voltage. The second driving signal includes a driving voltage waveform $V_{2A}(t)$ applied to the first movable portion 22A and a driving voltage waveform $V_{2B}(t)$ applied to the second movable portion 22B. The driving voltage waveform $V_{2A}(t)$ and the driving voltage waveform $V_{2B}(t)$ are out of phase with each other (that is, phase difference is 180°).

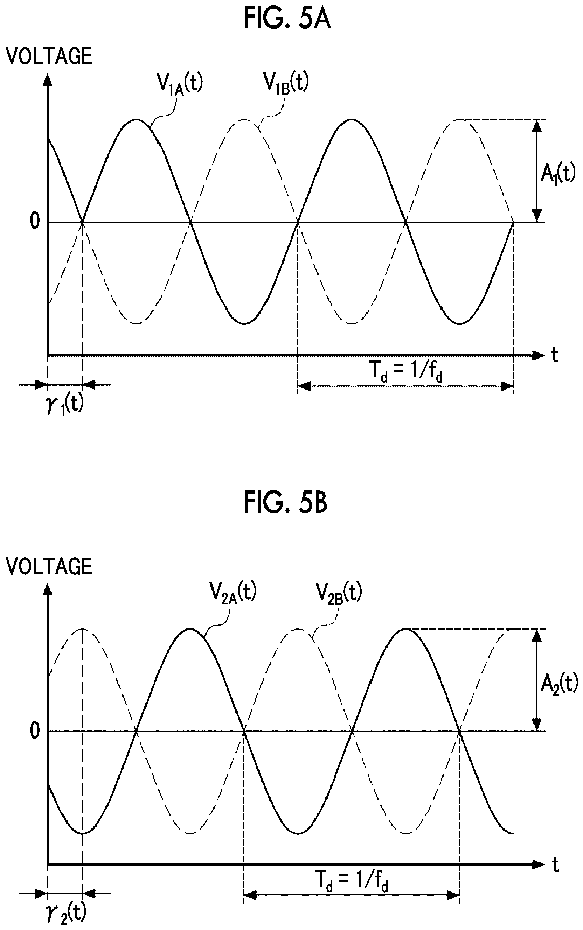

Figs. 5A and 5B show examples of the driving signals provided to the first actuator 21 and the second actuator 22. Fig. 5A shows the driving voltage waveforms $V_{1A}(t)$ and $V_{1B}(t)$ included in the first driving signal. Fig. 5B shows the driving voltage waveforms $V_{2A}(t)$ and $V_{2B}(t)$ included in the second driving signal.

The driving voltage waveforms $V_{1A}(t)$ and $V_{1B}(t)$ are each represented by the following equations (1A) and (1B).

$$V_{1A}(t) = A_1(t)\sin\left(2\pi f_d t + \gamma_1(t)\right) \quad \cdots (1A)$$

$$V_{1B}(t) = A_1(t)\sin\left(2\pi f_d t + \gamma_1(t) + \pi\right) \quad \cdots (1B)$$

Here, t is a time. $f_d$ is a driving frequency. $A_1(t)$ is amplitude and changes with time t. $\gamma_1(t)$ is phase and changes with time t. The phase difference between the driving voltage waveform $V_{1A}(t)$ and the driving voltage waveform $V_{1B}(t)$ is $\pi$ (that is, 180°).

That is, the first driving signal is a cyclic voltage signal whose amplitude and phase change with time. The driving voltage waveforms $V_{1A}(t)$ and $V_{1B}(t)$ are each applied to the first movable portion 21A and the second movable portion 21B to swing the mirror portion 20 around the first axis $a_1$ in a cycle $T_d$ (= $1/f_d$).

The driving voltage waveforms $V_{2A}(t)$ and $V_{2B}(t)$ are each represented by the following equations (2A) and (2B).

$$V_{2A}(t) = A_2(t)\sin(2\pi f_d t + \gamma_2(t) + \varphi) \quad \cdots (2A)$$

$$V_{2B}(t) = A_2(t)\sin(2\pi f_d t + \gamma_2(t) + \varphi + \pi) \quad \cdots (2B)$$

Here, t is a time. $f_d$ is a driving frequency. $A_2(t)$ is amplitude and changes with time t. $\gamma_2(t)$ is phase and changes with time t. The phase difference between the driving voltage waveform $V_{2A}(t)$ and the driving voltage waveform $V_{2B}(t)$ is $\pi$ (that is, 180°). Further, $\varphi$ is the phase difference between the driving voltage waveforms $V_{1A}(t)$ and $V_{1B}(t)$ and the driving voltage waveforms $V_{2A}(t)$ and $V_{2B}(t)$. In the present embodiment, $\varphi = \pi/2$ (that is, 90°) in order to cause the mirror portion 20 to perform a circular spiral scan operation. A value of $\varphi$ may be set to a value other than $\pi/2$. In a case where $\varphi$ is the value other than $\pi/2$, the mirror portion 20 performs an elliptical spiral scan operation.

That is, the second driving signal is the cyclic voltage signal whose amplitude and phase change with time. The driving voltage waveforms $V_{2A}(t)$ and $V_{2B}(t)$ are each applied to the first movable portion 22A and the second movable portion 22B to swing the mirror portion 20 around the second axis $a_2$ in the cycle $T_d$ (= $1/f_d$).

The amplitude $A_1(t)$ and phase $\gamma_1(t)$ of the first driving signal are each represented by polynomials indicated by the following equations (3) and (4). The amplitude $A_2(t)$ and phase $\gamma_2(t)$ of the second driving signal are each represented by polynomials indicated by the following equations (5) and (6). In the present embodiment, the polynomial is a cubic function, but may be a quartic or more function. A degree of the polynomial is determined by a required accuracy of the spiral scan operation and calculation power of the processor. $m_{kp}$ and $n_{kp}$ are coefficients. Here, k is 0, 1, 2, or 3. p is a or b. In the present embodiment, the phase $\gamma_2(t)$ is represented by a polynomial including the phase difference $\varphi$.

$$A_1(t) = m_{3a}t^3 + m_{2a}t^2 + m_{1a}t + m_{0a} \quad \cdots (3)$$

$$\gamma_1(t) = n_{3a}t^3 + n_{2a}t^2 + n_{1a}t + n_{0a} \quad \cdots (4)$$

$$A_2(t) = m_{3b}t^3 + m_{2b}t^2 + m_{1b}t + m_{0b} \quad \cdots (5)$$

$$\gamma_2(t) + \varphi = n_{3b}t^3 + n_{2b}t^2 + n_{1b}t + n_{0b} \quad \cdots (6)$$

The coefficients $m_{kp}$ and $n_{kp}$ are determined such that the swing amplitude around the first axis $a_1$ and the swing amplitude around the second axis $a_2$ of the mirror portion 20 change linearly with time (that is, the radius vector of the spiral orbit changes at a constant change speed). The swing amplitude around the first axis $a_1$ corresponds to a maximum value and a minimum value of the first deflection angle $\theta_1$. The swing amplitude around the second axis $a_2$ corresponds to a maximum value and a minimum value of the second deflection angle $\theta_2$.

For example, the coefficients $m_{kp}$ and $n_{kp}$ are determined by a method in which the driving controller 4 actually inputs the first driving signal and the second driving signal to the MEMS mirror 2 and adjustment is performed while checking the first deflection angle $\theta_1$ and the second deflection angle $\theta_2$ of the mirror portion 20 with a sensor or the like.

As the sensor to detect the deflection angle, there is a method of detecting, with an optical sensor, reflected light of the light beam L, which is emitted from the light source 3 installed outside the MEMS mirror 2 and reflected by the mirror portion 20, a method of incorporating, on the MEMS mirror 2, a strain sensor or the like that generates a voltage according to a stress, and the like.

The MEMS mirror 2 has a resonance mode frequency (hereinafter referred to as a first resonance frequency) accompanied by the swing around the first axis $a_1$ of the mirror portion 20 and a resonance mode frequency (hereinafter referred to as a second resonance frequency) accompanied by the swing around the second axis $a_2$ of the mirror portion 20. The MEMS mirror 2 is designed such that the two resonance mode frequencies substantially match. However, in reality, any one or both of the first resonance frequency and the second resonance frequency may deviate from design values due to a process variation, temperature change, and the like, and the two resonance frequencies may not match. The driving frequency $f_d$ is a frequency near the first resonance frequency and the second resonance frequency and preferably matches with the first resonance frequency and the second resonance frequency. However, in a case where the first resonance frequency and the second resonance frequency do not match, the driving frequency $f_d$ is different from at least one of the first resonance frequency or the second resonance frequency. Therefore, a response phase of the MEMS mirror 2 cannot be kept constant in a driving method of changing only the amplitude of the driving signal as in the related art. That is, the spiral rotation operation in which the radius vector changes linearly is difficult to be realized. In particular, in a case where a change speed of the swing amplitude of the mirror portion 20 is large, a phase shift that occurs during modulation becomes remarkable.

Further, in a case where there is non-linearity in mechanical properties of the MEMS mirror 2, the resonance frequency itself changes during driving, and the response phase of the mirror with respect to driving force changes. Therefore, the spiral rotation operation in which the radius vector changes linearly cannot be realized by the driving method of changing only the amplitude of the driving signal as in the related art. The above-mentioned non-linearity is caused by, for example, an effect (hard spring effect or soft spring effect) in which a rigidity or inertia moment changes according to a magnitude of the deflection angle of the mirror portion 20, for example.

To solve these problems, as in the technique of the present disclosure, the coefficients $m_{kp}$ and $n_{kp}$ related to the changes in the amplitude and the phase with time are appropriately determined by using the first driving signal and the second driving signal each as the cyclic voltage signals whose amplitudes and phases change with time. With the above, the spiral rotation operation in which the radius vector changes linearly can be realized.

The amplitudes $A_1(t)$ and $A_2(t)$ and the phases $\gamma_1(t)$ and $\gamma_2(t)$ are cyclic functions with a modulation cycle $T_m$ as a unit. In a case where the optical scanning device 10 is applied to the LiDAR device that acquires a distance image, the modulation cycle $T_m$ corresponds to a frame rate of the distance image. In a case where the LiDAR device is mounted on a moving body such as a drone, the modulation cycle $T_m$ is desirably as small as possible. In this case, for example, the frame rate is required to be at least 10 Hz or higher, preferably 20 Hz or higher. That is, the modulation cycle $T_m$ is required to be at least 0.1 seconds or less, preferably 0.05 seconds or less.

A line spacing of the spiral orbit corresponds to a resolution of the distance image. In order to increase the frame rate and narrow the line spacing, scanning at equal spacings without unevenness is most efficient and preferable. In the present embodiment, the spiral rotation operation in which the radius vector changes linearly is realized in order to narrow the line spacing of the spiral orbit.

In the present embodiment, the radius vector of the spiral orbit is expanded and contracted in one modulation cycle $T_m$. That is, one modulation cycle $T_m$ includes an expansion period TE and a contraction period TS. The expansion period TE is a period in which the swing amplitude around the first axis $a_1$ and the swing amplitude around the second axis $a_2$ increase linearly. The contraction period TS is a period in which the swing amplitude around the first axis $a_1$ and the swing amplitude around the second axis $a_2$ decrease linearly.

Considering practicality as the LiDAR device, an absolute value of the change speed of the swing amplitude around the first axis $a_1$ and an absolute value of the change speed of the swing amplitude around the second axis $a_2$ are each preferably 0.5 rad/s or more and more preferably 1.0 rad/s or more in the expansion period TE and the contraction period TS.

Hereinafter, Examples will be described. The following Examples 1 and 2 show experimental results of the spiral rotation operation of the mirror portion 20 in a case where the MEMS mirror 2 is driven under various driving conditions.

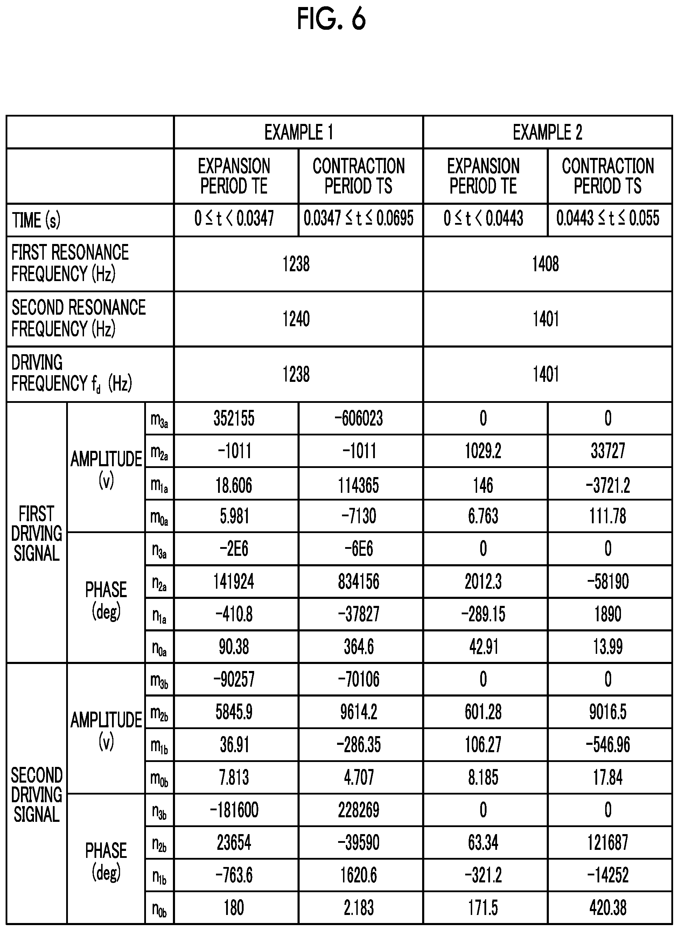

Fig. 6 shows driving conditions used in Examples 1 and 2. In Examples 1 and 2, the first driving signal and the second driving signal based on the following driving conditions are provided to the MEMS mirror 2 to cause the mirror portion 20 to perform the spiral rotation operation. In a state where the mirror portion 20 performs the spiral rotation operation, the light beam L is emitted from the light source 3 to the mirror portion 20. The light beam L reflected by the mirror portion 20 is incident on a position sensor diode (PSD) element, and a voltage signal output from the PSD element is converted into an incident position of the light beam L to evaluate the spiral orbit.

Example 1

As shown in Fig. 6, in Example 1, the modulation cycle $T_m$ is 0.0695 seconds, that is, the frame rate is about 14 Hz. In the modulation cycle $T_m$, the expansion period TE is set as a period of 0 seconds or more and less than 0.0347 seconds, and the contraction period TS is set as a period of 0.0347 seconds or more and 0.0695 seconds or less.

The resonance frequency of the MEMS mirror 2 is measured by the following method. A sinusoidal voltage signal is input only to the first actuator 21 to cause the mirror portion 20 to swing around the first axis $a_1$, and a frequency at which the swing amplitude is maximum in a case where a frequency of the sinusoidal wave is changed is set as the first resonance frequency. Similarly, a sinusoidal voltage signal is input only to the second actuator 22 to cause the mirror portion 20 to swing around the second axis $a_2$, and a frequency at which the swing amplitude is maximum in a case where a frequency of the sinusoidal wave is changed is set as the second resonance frequency. In a case where the swing amplitude is 5°, the first resonance frequency is 1,238 Hz and the second resonance frequency is 1,240 Hz. The driving frequency $f_d$ is set to 1,238 Hz. That is, the driving frequency $f_d$ is different from the second resonance frequency, and the difference therebetween is 2 Hz. The resonance frequency changes depending on the swing amplitude, temperature, and the like. In a case where the resonance frequency includes a region in which the resonance frequency does not match the driving frequency $f_d$ in a target swing amplitude range of the mirror portion 20, the method disclosed in the present application is effective.

In Example 1, the coefficients $m_{kp}$ and $n_{kp}$ are adjusted and determined such that the radius vector of the spiral orbit changes linearly with the amplitude $A_1(t)$ and the phase $\gamma_1(t)$ of the first driving signal each as cubic functions and with the amplitude $A_2(t)$ and the phase $\gamma_2(t)$ of the second driving signal each as cubic functions.

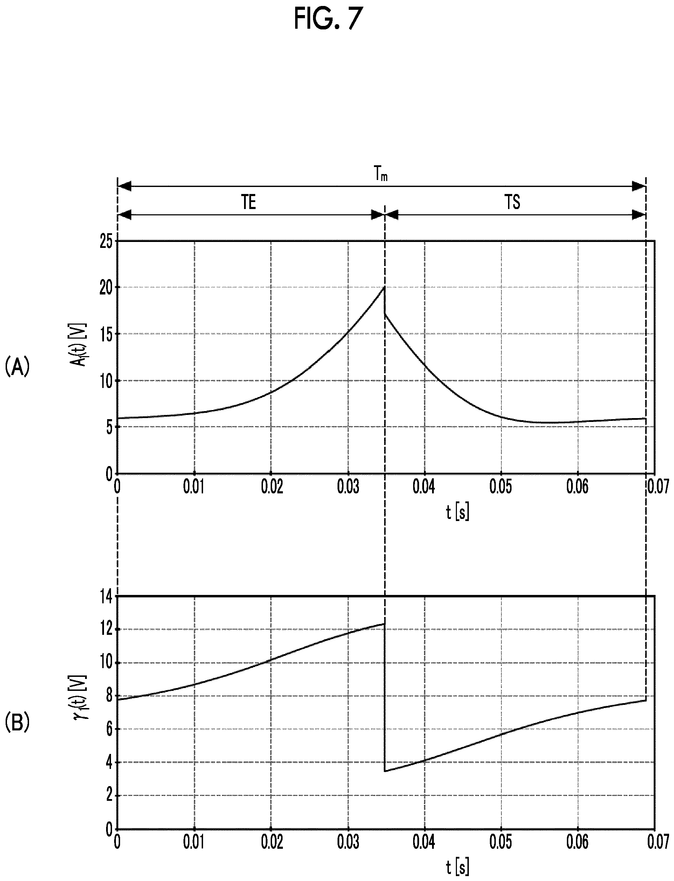

Fig. 7 shows changes in the amplitude $A_1(t)$ and phase $\gamma_1(t)$ of the first driving signal with time in one modulation cycle $T_m$. (A) of Fig. 7 shows the change in the amplitude $A_1(t)$ of the first driving signal with time. (B) of Fig. 7 shows the change in the phase $\gamma_1(t)$ of the first driving signal with time. The amplitude $A_1(t)$ shown in (A) of Fig. 7 is obtained by applying a coefficient $m_{ka}$ for the amplitude of the first driving signal shown in Fig. 6 to the above equation (3). The phase $\gamma_1(t)$ shown in (B) of Fig. 7 is obtained by applying a coefficient $n_{ka}$ for the phase of the first driving signal shown in Fig. 6 to the above equation (4).

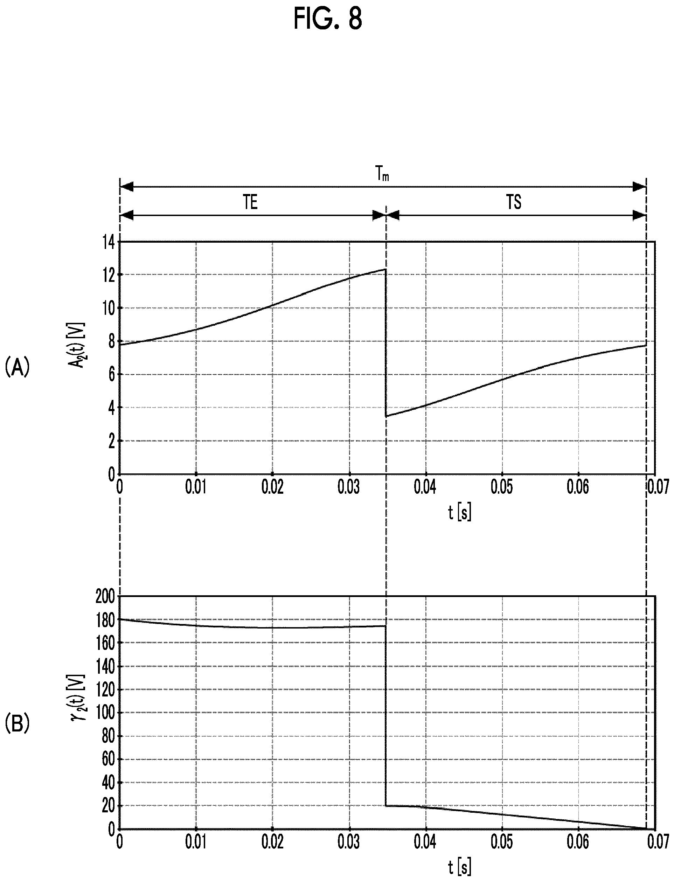

Fig. 8 shows changes in the amplitude $A_2(t)$ and phase $\gamma_2(t)$ of the second driving signal with time in one modulation cycle $T_m$. (A) of Fig. 8 shows the change in the amplitude $A_2(t)$ of the second driving signal with time. (B) of Fig. 8 shows the change in the phase $\gamma_2(t)$ of the second driving signal with time. The amplitude $A_2(t)$ shown in (A) of Fig. 8 is obtained by applying a coefficient $m_{kb}$ to the amplitude of the second driving signal shown in Fig. 6 to the above equation (5). The phase $\gamma_2(t)$ shown in (B) of Fig. 8 is obtained by applying a coefficient $n_{kb}$ for the phase of the second driving signal shown in Fig. 6 to the above equation (6).

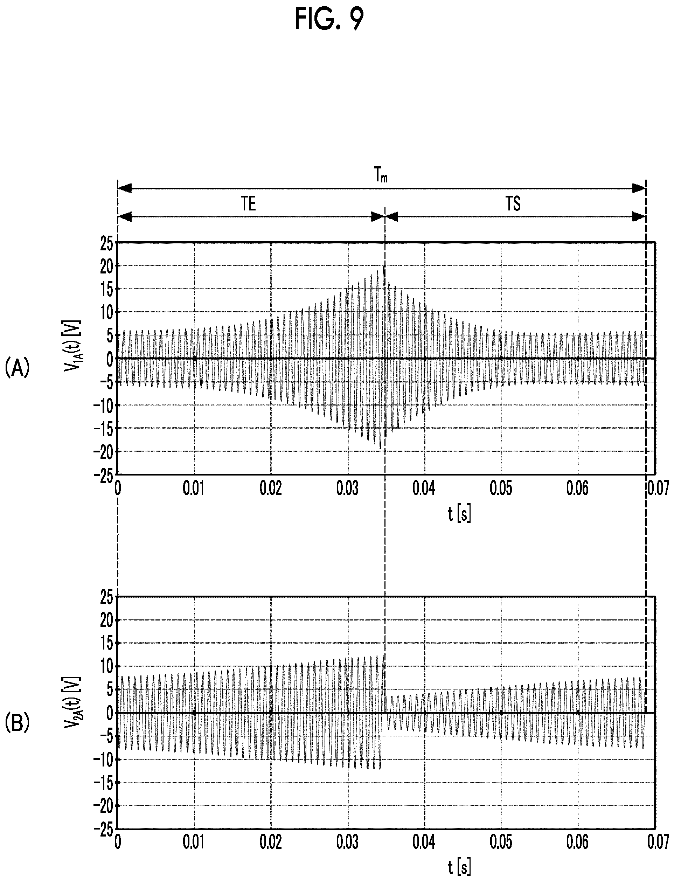

Fig. 9 shows changes in the driving voltage waveforms $V_{1A}(t)$ and $V_{2A}(t)$ with time in one modulation cycle $T_m$. The driving voltage waveform $V_{1A}(t)$ shown in (A) of Fig. 9 is obtained by applying the amplitude $A_1(t)$ and the phase $\gamma_1(t)$ shown in Fig. 7 to the above equation (1A). The driving voltage waveform $V_{2A}(t)$ shown in (B) of Fig. 9 is obtained by applying the amplitude $A_2(t)$ and the phase $\gamma_2(t)$ shown in Fig. 8 to the above equation (2A). Since the driving voltage waveforms $V_{1B}(t)$ and $V_{2B}(t)$ are each inverted versions of the driving voltage waveforms $V_{1A}(t)$ and $V_{2A}(t)$, illustrations thereof are omitted.

The first driving signal consisting of the driving voltage waveforms $V_{1A}(t)$ and $V_{1B}(t)$ shown in (A) of Fig. 9 and the second driving signal consisting of the driving voltage waveforms $V_{2A}(t)$ and $V_{2B}(t)$ shown in (B) of Fig. 9 are provided to the MEMS mirror 2. With the above, the first deflection angle $\theta_1$ and second deflection angle $\theta_2$ of the mirror portion 20 that performs the spiral rotation operation are measured. In reality, in order to prevent a polarization reversal of the first actuator 21 and the second actuator 22, which are the piezoelectric actuators, a negative bias of -20 V is added to each of the driving voltage waveforms.

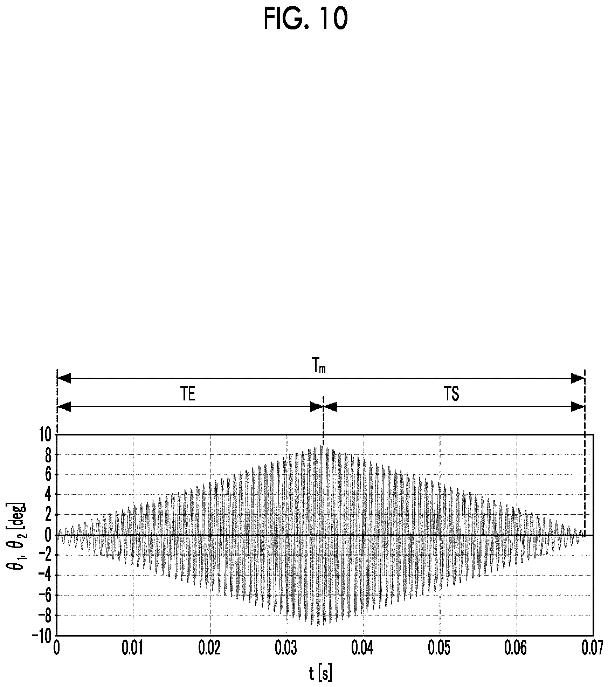

Fig. 10 shows measurement results of the first deflection angle $\theta_1$ and the second deflection angle $\theta_2$ in one modulation cycle $T_m$. In Fig. 10, the solid line shows a change in the first deflection angle $\theta_1$ with time, and the broken line shows a change in the second deflection angle $\theta_2$ with time. As shown in Fig. 10, in the expansion period TE and the contraction period TS, a maximum value and minimum value of the first deflection angle $\theta_1$ and a maximum value and minimum value of the second deflection angle $\theta_2$ each change linearly. That is, one modulation cycle $T_m$ includes a period in which the swing amplitude around the first axis $a_1$ and the swing amplitude around the second axis $a_2$ change linearly.

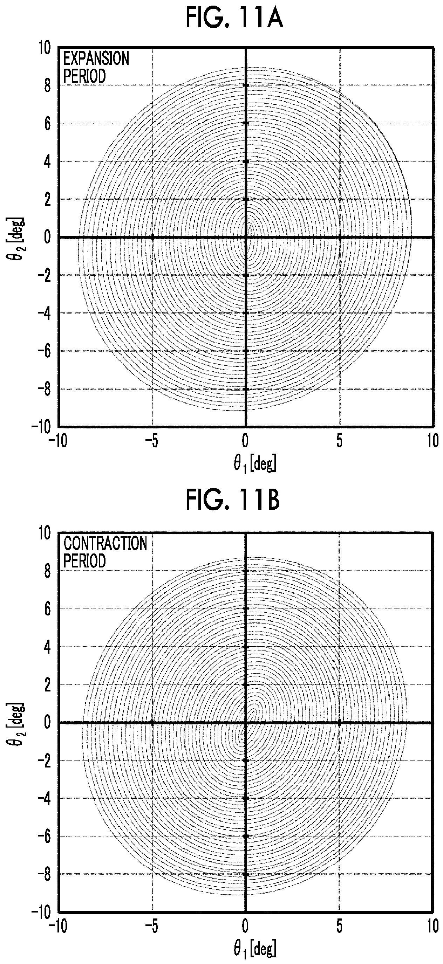

Figs. 11A and 11B show spiral orbits in one modulation cycle $T_m$. Fig. 11A shows the spiral orbit in the expansion period TE. Fig. 11B shows the spiral orbit in the contraction period TS. As shown in Figs. 11A and 11B, according to Example 1, the spiral rotation operation in which the radius vector expands and contracts linearly at the frequency of 14 Hz in a range of 0° to 9° is realized.

The change speed (also referred to as modulation speed) of the swing amplitude calculated from the results shown in Figs. 11A and 11B is 4.5 rad/s in the expansion period TE and -4.5 rad/s in the contraction period TS. That is, the absolute value of the change speed of the swing amplitude around the first axis $a_1$ and the absolute value of the change speed of the swing amplitude around the second axis $a_2$ are each 1.0 rad/s or more.

Example 2

Next, Example 2 will be described. As shown in Fig. 6, in Example 2, the modulation cycle $T_m$ is 0.055 seconds, that is, the frame rate is about 18.6 Hz. In the modulation cycle $T_m$, the expansion period TE is set as a period of 0 seconds or more and less than 0.0443 seconds, and the contraction period TS is set as a period of 0.0443 seconds or more and 0.055 seconds or less. In Example 2, the MEMS mirror 2 having a different dimension and shape from that of Example 1 is used. The measurement result of the resonance frequency in a case where the swing amplitude is 5° is that the first resonance frequency is 1,408 Hz and the second resonance frequency is 1,401 Hz. The driving frequency $f_d$ is 1,401 Hz. The second resonance frequency indicates the non-linearity that changes depending on the angle and is 1,405 Hz in a case where the swing amplitude is 10°. That is, the second resonance frequency and the driving frequency have a matching part and a different part in a swing amplitude range of 5° to 10°.

In Example 2, the coefficients $m_{kp}$ and $n_{kp}$ are set such that the radius vector of the spiral orbit changes linearly

with the amplitude $A_1(t)$ and the phase $\gamma_1(t)$ of the first driving signal each as quadratic functions and with the amplitude $A_2(t)$ and the phase $\gamma_2(t)$ of the second driving signal each as quadratic functions. In order to make the amplitude and the phase the quadratic functions, cubic coefficients $m_{3p}$ and $n_{3p}$ are set to 0.

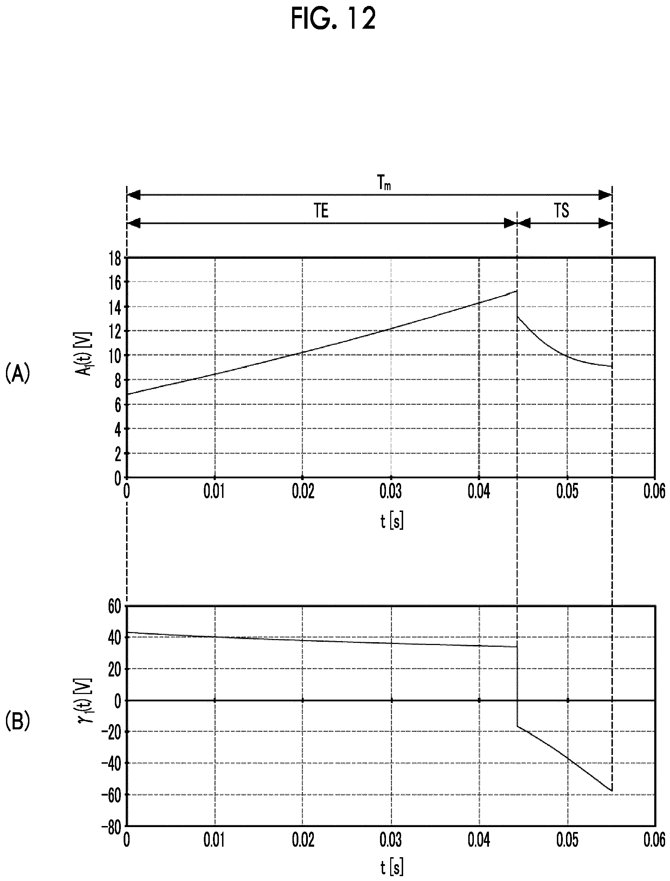

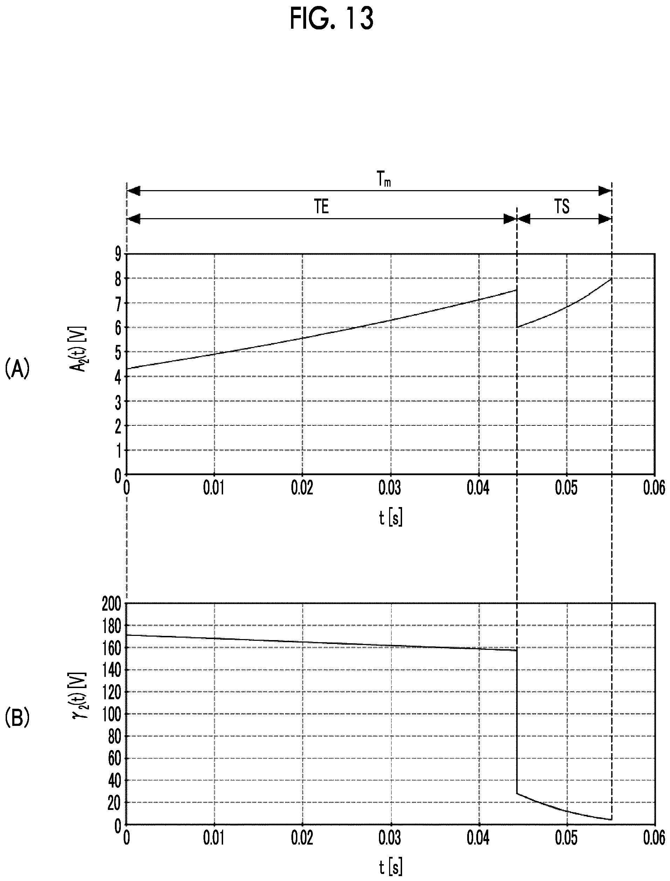

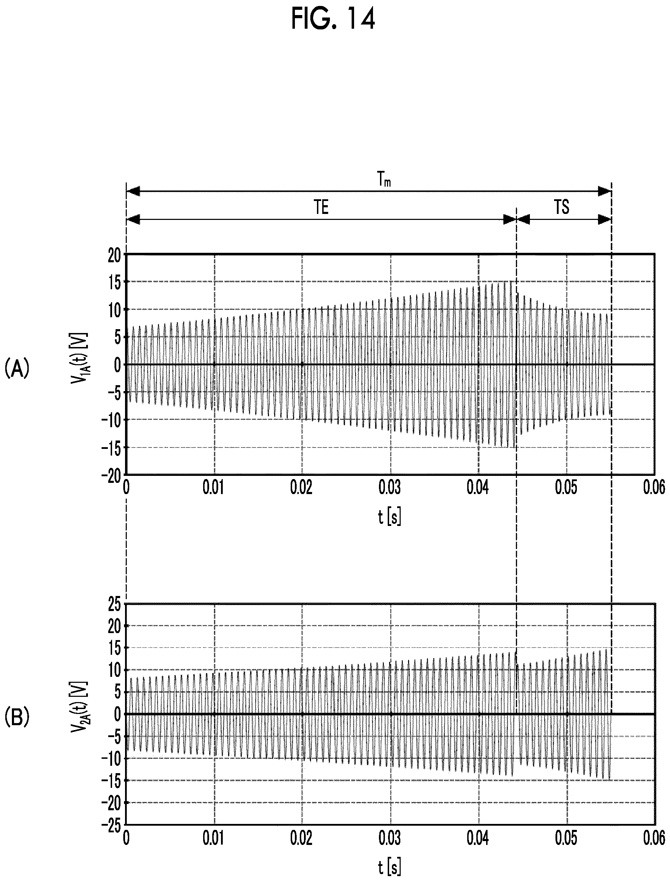

Figs. 12 and 13 correspond to Figs. 7 and 8 shown in Example 1 and show changes in the amplitude and phase of the first driving signal with time and changes in the amplitude and phase of the second driving signal with time. Fig. 14 corresponds to Fig. 9 shown in Example 1 and show a change in the driving voltage waveform with time.

Other driving conditions and the evaluation method in Example 2 are the same as those in Example 1. In Example 2, in order to prevent the polarization reversal of the first actuator 21 and the second actuator 22, which are the piezoelectric actuators, a negative bias of -17V is added to each of the driving voltage waveforms.

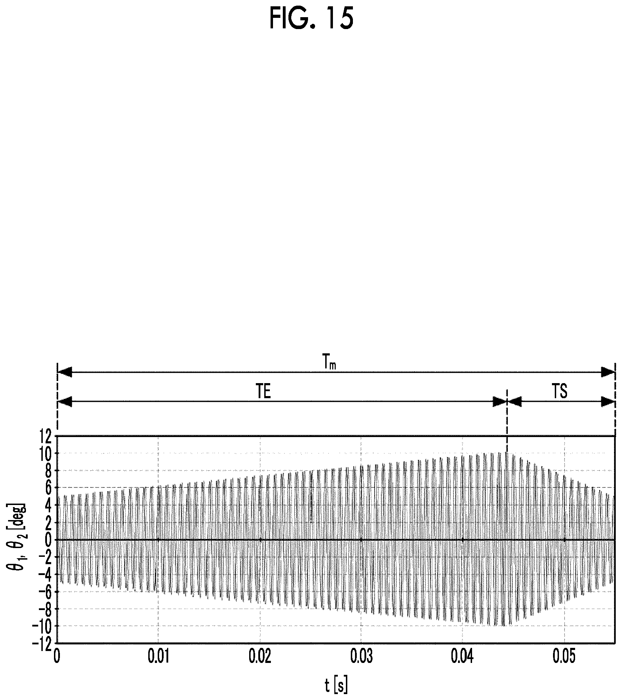

Fig. 15 corresponds to Fig. 10 shown in Example 1 and shows measurement results of the first deflection angle $\theta_1$ and the second deflection angle $\theta_2$ in Example 2. The solid line shows a change in the first deflection angle $\theta_1$ with time, and the broken line shows a change in the second deflection angle $\theta_2$ with time. As shown in Fig. 15, in the expansion period TE and the contraction period TS, a maximum value and minimum value of the first deflection angle $\theta_1$ and a maximum value and minimum value of the second deflection angle $\theta_2$ each change linearly. That is, one modulation cycle $T_m$ includes a period in which the swing amplitude around the first axis $a_1$ and the swing amplitude around the second axis $a_2$ change linearly.

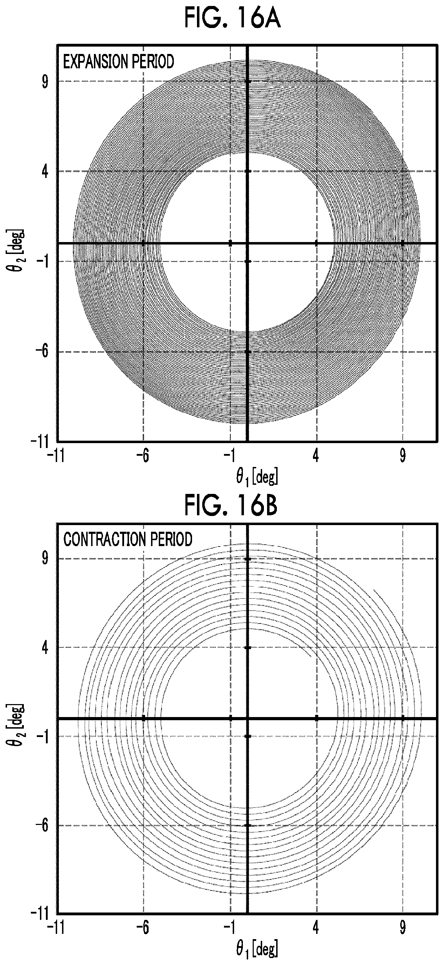

Figs. 16A and 16B show spiral orbits in one modulation cycle $T_m$. Fig. 16A shows the spiral orbit in the expansion period TE. Fig. 16B shows the spiral orbit in the contraction period TS. As shown in Figs. 16A and 16B, according to Example 2, the spiral rotation operation in which the radius vector expands and contracts linearly at the frequency of 18.6 Hz in a range of 5° to 10° is realized.

The change speed of the swing amplitude calculated from the results shown in Figs. 16A and 16B is 2.0 rad/s in the expansion period TE and -8.2 rad/s in the contraction period TS. That is, the absolute value of the change speed of the swing amplitude around the first axis $a_1$ and the absolute value of the change speed of the swing amplitude around the second axis $a_2$ are each 1.0 rad/s or more.

Comparative Example

Next, a comparative example will be described. The comparative example corresponds to the related art and is an example in which the amplitudes of the first driving signal and the second driving signal are linearly changed and the phases of the driving signals are set as fixed values.

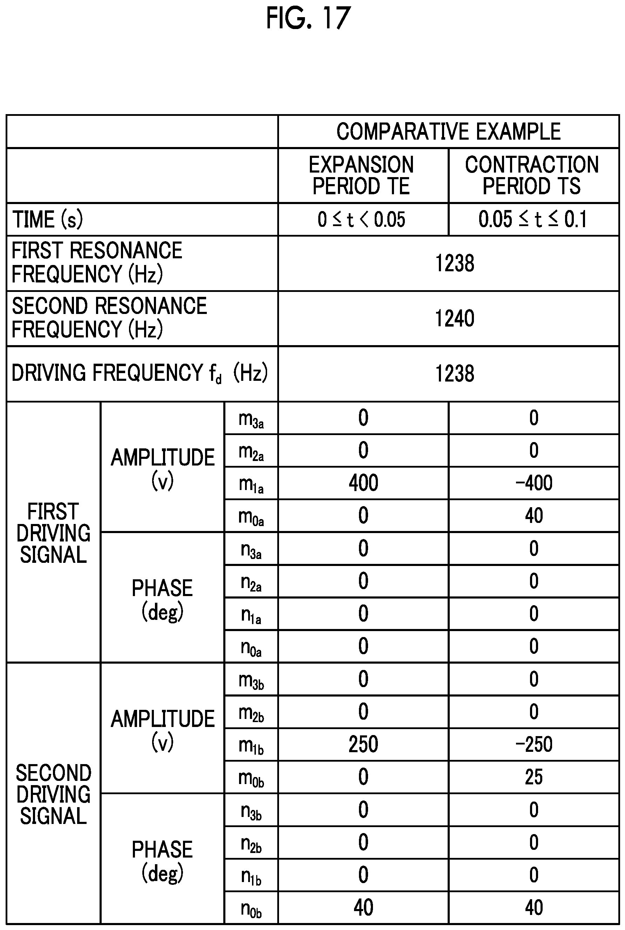

Fig. 17 shows driving conditions used in the comparative example. In the comparative example, the modulation cycle $T_m$ is set to 0.1 seconds, that is, the frame rate is set to about 10 Hz. In the modulation cycle $T_m$, the expansion period TE is set as a period of 0 seconds or more and less than 0.05 seconds, and the contraction period TS is set as a period of 0.05 seconds or more and 0.1 seconds or less. Further, in the comparative example, the MEMS mirror 2 having the same structure as that of Example 1 is used, and the first resonance frequency is 1,238 Hz and the second resonance frequency is 1,240 Hz. The driving frequency $f_d$ is set to 1,238 Hz.

In the comparative example, in order to make the amplitude $A_1(t)$ of the first driving signal and the amplitude $A_2(t)$ of the second driving signal linear functions, the cubic coefficient $m_{3p}$ and the quadratic coefficient $m_{2p}$ are each set to zero. Further, in order to set the phase $\gamma_1(t)$ of the first driving signal and the phase $\gamma_2(t)$ of the second driving signal to fixed values, the cubic coefficient $n_{3p}$, the quadratic coefficient $n_{2p}$, and the linear coefficient $n_{1p}$ are each set to zero. Further, a constant coefficient $n_{0a}$ is set to zero for the phase $\gamma_1(t)$ of the first driving signal, and a constant coefficient $n_{0b}$ is set to 40 for the phase $\gamma_2(t)$ of the second driving signal. A value of the coefficient $n_{0b}$ is determined such that the mirror portion 20 performs a circular scan in which the radius vector does not change (that is, circular scan in which the radius vector is constant), that is, the swing phase difference between the first axis $a_1$ and the second axis $a_2$ is $\pi/2$.

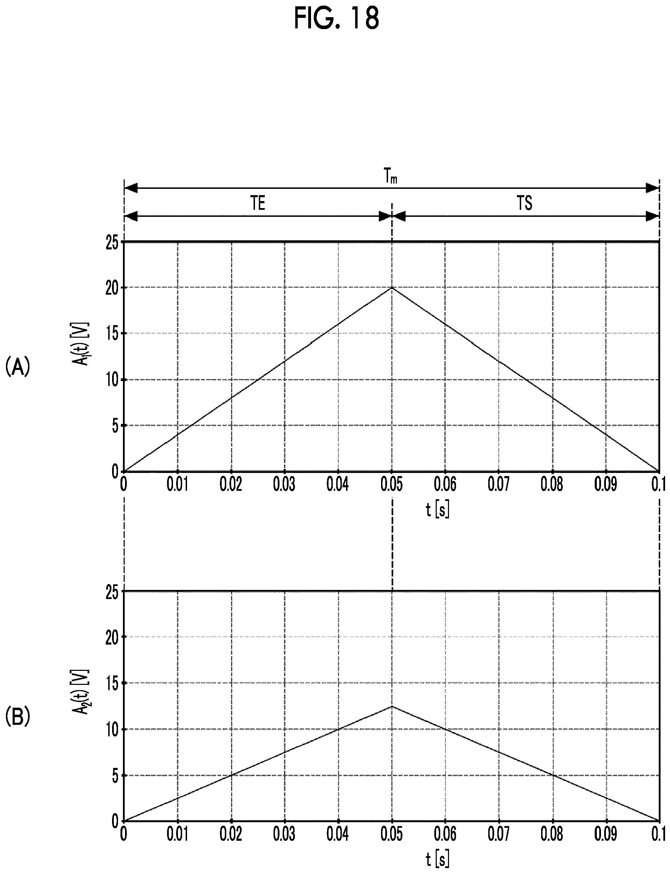

Fig. 18 shows changes in the amplitudes of the first driving signal and the second driving signal with time in one modulation cycle $T_m$. (A) of Fig. 18 shows the change in the amplitude $A_1(t)$ of the first driving signal with time. (B) of Fig. 18 shows the change in the amplitude $A_2(t)$ of the second driving signal with time. As shown in Fig. 18, the amplitudes of the first driving signal and the second driving signal linearly increase and decrease.

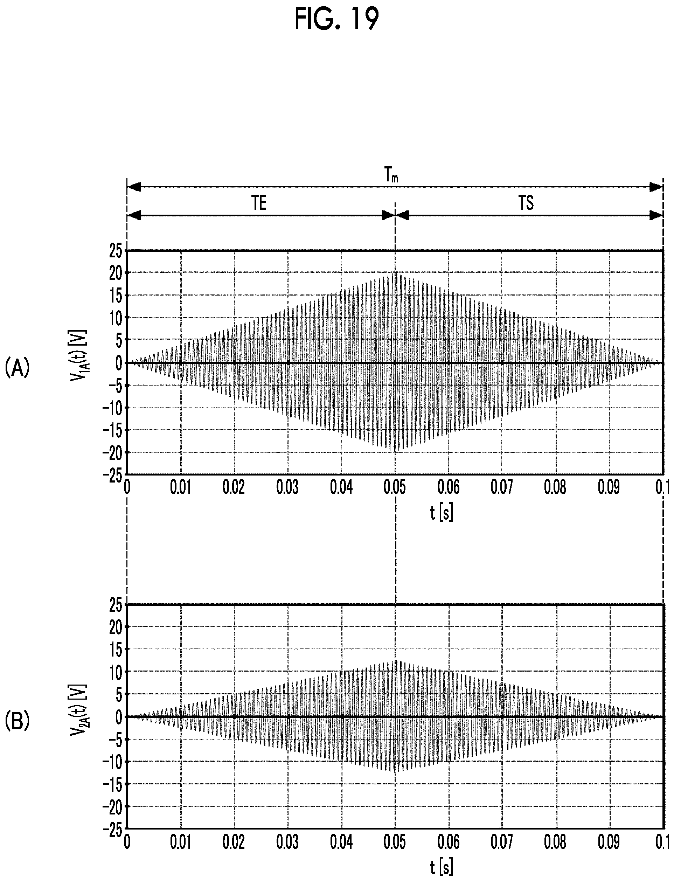

Fig. 19 shows changes in the driving voltage waveforms $V_{1A}(t)$ and $V_{2A}(t)$ with time in one modulation cycle $T_m$. (A) of Fig. 19 shows the driving voltage waveform $V_{1A}(t)$. (B) of Fig. 19 shows the driving voltage waveform $V_{2A}(t)$. Since the driving voltage waveforms $V_{1B}(t)$ and $V_{2B}(t)$ are each inverted versions of the driving voltage waveforms $V_{1A}(t)$ and $V_{2A}(t)$, illustrations thereof are omitted.

Other driving conditions and the evaluation method in the comparative example are the same as those in Example 1. In the comparative example, in order to prevent the polarization reversal of the first actuator 21 and the second actuator 22, which are the piezoelectric actuators, a negative bias of -20 V is added to each of the driving voltage waveforms.

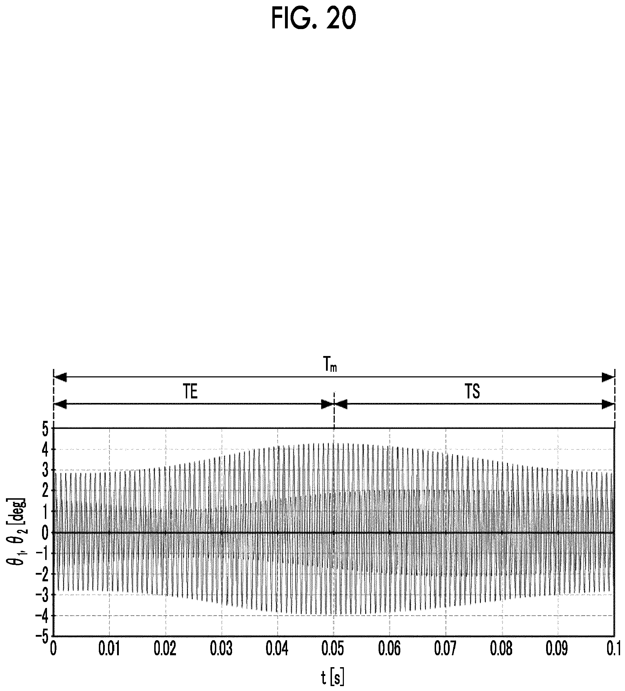

Fig. 20 corresponds to Fig. 10 shown in Example 1 and shows measurement results of the first deflection angle

$\theta_1$ and the second deflection angle $\theta_2$ in the comparative example. The solid line shows a change in the first deflection angle $\theta_1$ with time, and the broken line shows a change in the second deflection angle $\theta_2$ with time. As shown in Fig. 20, in the expansion period TE and the contraction period TS, a maximum value and minimum value of the first deflection angle $\theta_1$ and a maximum value and minimum value of the second deflection angle $\theta_2$ each change non-linearly. That is, one modulation cycle $T_m$ does not include a period in which the swing amplitude around the first axis $a_1$ and the swing amplitude around the second axis $a_2$ change linearly.

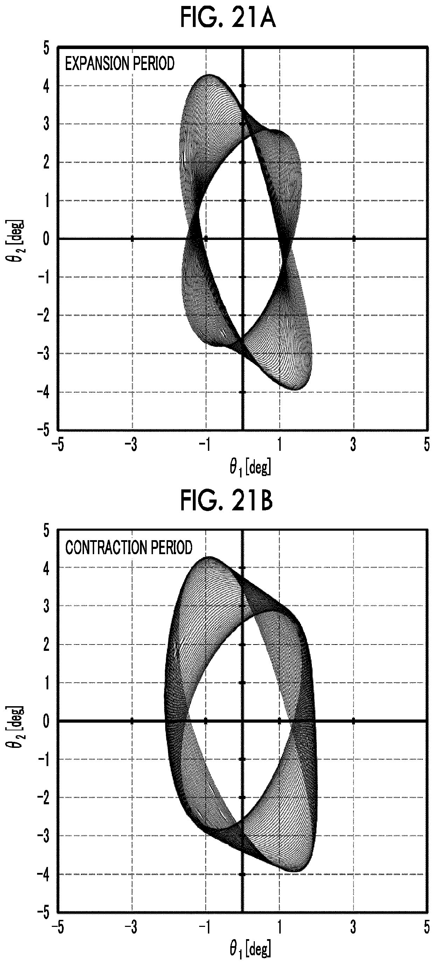

Figs. 21A and 21B show orbits in one modulation cycle $T_m$. Fig. 21A shows the orbit in the expansion period TE. Fig. 21B shows the orbit in the contraction period TS. As shown in Figs. 21A and 21B, in the comparative example, the phase difference between the swing around the first axis $a_1$ of the mirror portion 20 and the swing around the second axis $a_2$ thereof is not constant in one modulation cycle $T_m$, and the orbit does not become the spiral orbit. That is, in the comparative example, the spiral rotation operation in which the radius vector changes linearly cannot be realized.

The change speed of the swing amplitude calculated from the results shown in Figs. 21A and 21B is 0.5 rad/s in the expansion period TE and -0.5 rad/s in the contraction period TS, which is low. Further, in the comparative example, a maximum value of the first deflection angle $\theta_1$ is 2.76°, and a maximum value of the second deflection angle $\theta_2$ is 4.2°, which is low, and a large swing amplitude cannot be obtained.

As described above, confirmation is made that it is possible to cause the mirror portion 20 to perform the spiral rotation operation including the period in which the swing amplitude around the first axis $a_1$ and the swing amplitude around the second axis $a_2$ change linearly, with the first driving signal and the second driving signal each as the cyclic voltage signals whose amplitudes and phases change with time.

Modification Example

Hereinafter, a modification example of the above embodiment will be described.

In the above embodiment, the first driving signal and the second driving signal are represented by the above equations (1A), (1B), (2A), and (2B), and the coefficients $m_{kp}$ and $n_{kp}$ are adjusted to determine the waveform. However, the waveform may be determined by using an equation of motion representing a mechanical response of the mirror portion 20.

The mechanical response of the mirror portion 20 is represented by the equation of motion of the following equation (7). F is a rotational torque. I is a moment of inertia. $\theta(t)$ is a deflection angle of the mirror portion 20. $\omega_r$ is a resonance frequency. Q is a resonance Q value.

$$\frac{F}{I} = \ddot{\theta}(t) + \frac{\omega_r}{Q}\dot{\theta}(t) + \omega_r{}^2\theta(t) \quad \cdots (7)$$

The spiral rotation operation in which the radius vector changes linearly is represented by the following equations (8A) and (8B).

$$\theta(t) = X(t)\sin(\omega_\alpha t + \varphi) \quad \cdots (8A)$$

$$X(t) = at + b \quad \cdots (8B)$$

By substituting the above equations (8A) and (8B) into the above equation (7), the following equations (9) to (11) are obtained. $\beta$ is a constant of proportionality.

$$\beta \cdot V = B(t)\sin(\omega_\alpha t + \varphi) + C(t)\cos(\omega_\alpha t + \varphi) \quad \cdots (9)$$

$$B(t) = \frac{a\omega_r}{Q} + (\omega_r{}^2 - \omega_\alpha{}^2)X(t) \quad \cdots (10)$$

$$C(t) = 2a\omega_\alpha + \frac{\omega_\alpha \omega_r}{Q}X(t) \quad \cdots (11)$$

The above equations (9) to (11) are equivalent to a sinusoidal wave whose amplitude and phase change with time. The waveforms representing the first driving signal and the second driving signal can be created by deriving values such as Q and $\omega_r$ based on a result of a driving test on each of the first axis $a_1$ and second axis $a_2$ of the mirror portion 20 and by substituting the derived values into the above equations (9) to (11).

Therefore, the following equations (12A) and (12B) can be used instead of the equations (1A) and (1B) in the above embodiment, and the following equations (13A) and (13B) can be used instead of the equations (2A) and (2B).

$$V_{1A}(t) = B_1(t)\sin(2\pi f_d t) + C_1(t)\cos(2\pi f_d t) \quad \cdots (12A)$$

$$V_{1B}(t) = B_1(t)\sin(2\pi f_d t + \pi) + C_1(t)\cos(2\pi f_d t + \pi) \quad \cdots (12B)$$

$$V_{2A}(t) = B_2(t)\sin(2\pi f_d t + \varphi) + C_2(t)\cos(2\pi f_d t + \varphi) \quad \cdots (13A)$$

$$V_{2B}(t) = B_2(t)\sin(2\pi f_d t + \varphi + \pi) + C_2(t)\cos(2\pi f_d t + \varphi + \pi) \quad \cdots (13B)$$

The mirror portion 20 may be driven with the value derived based on the result of the driving test as described above as the initial value, and the coefficient may be finely adjusted such that the actual response of the mirror portion 20 approaches a target response while being monitored by an angle sensor or the like.

Equations (12A) and (12B) are equivalent equations of equations (1A) and (1B), and equations (8A) and (8B) are equivalent equations of equations (2A) and (2B).

The configuration of the MEMS mirror 2 shown in the above embodiment can be changed as appropriate. For example, in the above embodiment, the first actuator 21 and the second actuator 22 have the annular shape, but one or both of the first actuator 21 and the second actuator 22 may have a meander structure. A support member having a configuration other than the torsion bar may be used as the first support portion 24 and the second support portion 25.

In the above embodiment, the swing amplitude around the first axis $a_1$ and the swing amplitude around the second axis $a_2$ are linearly expanded and contracted in all regions in one modulation cycle $T_m$, but the present disclosure is not limited thereto. For example, in order to wait for an emission timing of LiDAR measurement light, a portion where the swing amplitude is constant may be provided or a portion where the swing amplitude temporarily expands or contracts in a curvilinear manner may be included. That is, only a portion where the swing amplitude changes linearly is required to be included.

The hardware configuration of the driving controller 4 can be modified in various ways. The processing unit of the driving controller 4 may be configured of one processor or a combination of two or more processors of the same type or different types (for example, a combination of a plurality of field programmable gate arrays (FPGAs), and/or a combination of a CPU and an FPGA).

All documents, patent applications, and technical standards described in the present specification are incorporated by reference in the present specification to the same extent as in a case where the incorporation of each individual document, patent application, and technical standard by reference is specifically and individually described.

Explanation of References

    2: MEMS mirror
    3: light source
    4: driving controller
    5: surface to be scanned
    10: optical scanning device
    20: mirror portion
    20A: reflecting surface
    21: first actuator
    21A: first movable portion
    21B: second movable portion
    22: second actuator
    22A: first movable portion

22B: second movable portion
23: support frame
24: first support portion
25: second support portion
26: fixing portion
27A, 27B, 28A, 28B: piezoelectric element
43: light source driving unit
44: mirror driving unit
L: light beam
N: normal line
TE: expansion period
TS: contraction period
$T_m$: modulation cycle

**Claims**

1. An optical scanning device comprising:

   a mirror device that has a mirror portion, which is swingable around a first axis and a second axis orthogonal to each other, having a reflecting surface reflecting incident light, a first actuator causing the mirror portion to swing around the first axis by applying a rotational torque around the first axis to the mirror portion, and a second actuator causing the mirror portion to swing around the second axis by applying a rotational torque around the second axis to the mirror portion; and
   a processor that provides a first driving signal to the first actuator and provides a second driving signal to the second actuator,
   wherein the processor, with the first driving signal and the second driving signal each as cyclic voltage signals whose amplitudes and phases change with time, causes the mirror portion to perform a spiral rotation operation including a period in which a swing amplitude around the first axis and a swing amplitude around the second axis change linearly.

2. The optical scanning device according to claim 1,
   wherein a frequency of the cyclic voltage signal is a frequency near a resonance frequency around the first axis and a resonance frequency around the second axis.

3. The optical scanning device according to claim 2,
   wherein the resonance frequency around the first axis is different from the resonance frequency around the second axis.

4. The optical scanning device according to claim 2 or 3,
   wherein the frequency of the cyclic voltage signal is different from at least one of the resonance frequency around the first axis or the resonance frequency around the second axis.

5. The optical scanning device according to any one of claims 1 to 4,
   wherein in the period, an absolute value of a change speed of the swing amplitude around the first axis and an absolute value of a change speed of the swing amplitude around the second axis are each 0.5 rad/s or more.

6. The optical scanning device according to any one of claims 1 to 4,
   wherein in the period, an absolute value of a change speed of the swing amplitude around the first axis and an absolute value of a change speed of the swing amplitude around the second axis are each 1.0 rad/s or more.

7. The optical scanning device according to any one of claims 1 to 5,
   wherein the period includes an expansion period in which the swing amplitude around the first axis and the swing amplitude around the second axis increase linearly and a contraction period in which the swing amplitude around the first axis and the swing amplitude around the second axis decrease linearly.

8. A control method of an optical scanning device that includes a mirror device that has a mirror portion, which is swingable around a first axis and a second axis orthogonal to each other, having a reflecting surface reflecting incident light, a first actuator causing the mirror portion to swing around the first axis by applying a rotational torque around the first axis to the mirror portion, and a second actuator causing the mirror portion to swing around the second axis by applying a rotational torque around the second axis to the mirror portion, the control method comprising:

with the first driving signal provided to the first actuator and the second driving signal provided to the second actuator each as cyclic voltage signals whose amplitudes and phases change with time, causing the mirror portion to perform a spiral rotation operation including a period in which a swing amplitude around the first axis and a swing amplitude around the second axis change linearly.

# FIG. 1

# FIG. 2

# FIG. 3

## FIG. 4A

## FIG. 4B

## FIG. 5A

## FIG. 5B

# FIG. 6

| | | | EXAMPLE 1 | | EXAMPLE 2 | |
|---|---|---|---|---|---|---|
| | | | EXPANSION PERIOD TE | CONTRACTION PERIOD TS | EXPANSION PERIOD TE | CONTRACTION PERIOD TS |
| TIME (s) | | | $0 \leq t < 0.0347$ | $0.0347 \leq t \leq 0.0695$ | $0 \leq t < 0.0443$ | $0.0443 \leq t \leq 0.055$ |
| FIRST RESONANCE FREQUENCY (Hz) | | | 1238 | | 1408 | |
| SECOND RESONANCE FREQUENCY (Hz) | | | 1240 | | 1401 | |
| DRIVING FREQUENCY $f_d$ (Hz) | | | 1238 | | 1401 | |
| FIRST DRIVING SIGNAL | AMPLITUDE (v) | $m_{3a}$ | 352155 | −606023 | 0 | 0 |
| | | $m_{2a}$ | −1011 | −1011 | 1029.2 | 33727 |
| | | $m_{1a}$ | 18.606 | 114365 | 146 | −3721.2 |
| | | $m_{0a}$ | 5.981 | −7130 | 6.763 | 111.78 |
| | PHASE (deg) | $n_{3a}$ | −2E6 | −6E6 | 0 | 0 |
| | | $n_{2a}$ | 141924 | 834156 | 2012.3 | −58190 |
| | | $n_{1a}$ | −410.8 | −37827 | −289.15 | 1890 |
| | | $n_{0a}$ | 90.38 | 364.6 | 42.91 | 13.99 |
| SECOND DRIVING SIGNAL | AMPLITUDE (v) | $m_{3b}$ | −90257 | −70106 | 0 | 0 |
| | | $m_{2b}$ | 5845.9 | 9614.2 | 601.28 | 9016.5 |
| | | $m_{1b}$ | 36.91 | −286.35 | 106.27 | −546.96 |
| | | $m_{0b}$ | 7.813 | 4.707 | 8.185 | 17.84 |
| | PHASE (deg) | $n_{3b}$ | −181600 | 228269 | 0 | 0 |
| | | $n_{2b}$ | 23654 | −39590 | 63.34 | 121687 |
| | | $n_{1b}$ | −763.6 | 1620.6 | −321.2 | −14252 |
| | | $n_{0b}$ | 180 | 2.183 | 171.5 | 420.38 |

# FIG. 7

# FIG. 8

# FIG. 9

# FIG. 10

# FIG. 11A

EXPANSION
PERIOD

$\theta_2$ [deg]

$\theta_1$ [deg]

# FIG. 11B

CONTRACTION
PERIOD

$\theta_2$ [deg]

$\theta_1$ [deg]

# FIG. 12

(A)

(B)

# FIG. 13

(A)

(B)

# FIG. 14

# FIG. 15

## FIG. 16A

EXPANSION PERIOD

$\theta_2$ [deg]

$\theta_1$ [deg]

## FIG. 16B

CONTRACTION PERIOD

$\theta_2$ [deg]

$\theta_1$ [deg]

# FIG. 17

| | | | COMPARATIVE EXAMPLE | |
|---|---|---|---|---|
| | | | EXPANSION PERIOD TE | CONTRACTION PERIOD TS |
| TIME (s) | | | $0 \leq t < 0.05$ | $0.05 \leq t \leq 0.1$ |
| FIRST RESONANCE FREQUENCY (Hz) | | | 1238 | |
| SECOND RESONANCE FREQUENCY (Hz) | | | 1240 | |
| DRIVING FREQUENCY $f_d$ (Hz) | | | 1238 | |
| FIRST DRIVING SIGNAL | AMPLITUDE (v) | $m_{3a}$ | 0 | 0 |
| | | $m_{2a}$ | 0 | 0 |
| | | $m_{1a}$ | 400 | −400 |
| | | $m_{0a}$ | 0 | 40 |
| | PHASE (deg) | $n_{3a}$ | 0 | 0 |
| | | $n_{2a}$ | 0 | 0 |
| | | $n_{1a}$ | 0 | 0 |
| | | $n_{0a}$ | 0 | 0 |
| SECOND DRIVING SIGNAL | AMPLITUDE (v) | $m_{3b}$ | 0 | 0 |
| | | $m_{2b}$ | 0 | 0 |
| | | $m_{1b}$ | 250 | −250 |
| | | $m_{0b}$ | 0 | 25 |
| | PHASE (deg) | $n_{3b}$ | 0 | 0 |
| | | $n_{2b}$ | 0 | 0 |
| | | $n_{1b}$ | 0 | 0 |
| | | $n_{0b}$ | 40 | 40 |

# FIG. 18

(A)

(B)

# FIG. 19

# FIG. 20

## FIG. 21A

EXPANSION PERIOD

$\theta_1$ [deg]

$\theta_2$ [deg]

## FIG. 21B

CONTRACTION PERIOD

$\theta_1$ [deg]

$\theta_2$ [deg]

EP 4 109 165 A1

Europäisches
Patentamt
European
Patent Office
Office européen
des brevets

# EUROPEAN SEARCH REPORT

Application Number

EP 22 17 9749

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 108 794 A1 (OLYMPUS CORP [JP]) 28 December 2016 (2016-12-28) * paragraph [0028]; figures 4,10 * * Equations 6, 9 * * paragraph [0008] * * figure 14A * | 1-8 | INV. G02B26/08 |
| Y,D | JP 2008 170500 A (SUMITOMO PRECISION PROD CO) 24 July 2008 (2008-07-24) * figure 1 * | 1-8 | |
| A | TORTSCHANOFF A ET AL: "Position encoding and phase control of resonant MOEMS-mirros", PROCEDIA CHEMISTRY, ELSEVIER, AMSTERDAM, NL, vol. 1, no. 1, 1 September 2009 (2009-09-01), pages 1315-1318, XP026799795, ISSN: 1876-6196 [retrieved on 2009-09-01] * figure 4 * | 1-8 | TECHNICAL FIELDS SEARCHED (IPC) G02B |

The present search report has been drawn up for all claims

| Place of search | Date of completion of the search | Examiner |
|---|---|---|
| Munich | 24 October 2022 | Linke, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 9749

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2022

| Patent document cited in search report | | Publication date | Patent family member(s) | | Publication date |
|---|---|---|---|---|---|
| EP 3108794 | A1 | 28-12-2016 | CN | 105899120 A | 24-08-2016 |
| | | | EP | 3108794 A1 | 28-12-2016 |
| | | | JP | 6382297 B2 | 29-08-2018 |
| | | | JP | WO2015125976 A1 | 30-03-2017 |
| | | | US | 2017045734 A1 | 16-02-2017 |
| | | | WO | 2015125976 A1 | 27-08-2015 |
| JP 2008170500 | A | 24-07-2008 | NONE | | |

EPO FORM P0459

**EP 4 109 165 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008170500 A